# EUROPÄISCHE PATENTSCHRIFT

(11) **EP 0 635 671 B1**
(45) Veröffentlichungstag und Bekanntmachung des Hinweises auf die Patenterteilung: **30.10.1996**
(21) Anmeldenummer: 94109417.9
(22) Anmeldetag: 17.06.1994
(51) Int. Cl.: F16L 55/00

(54) **Sicherheitsschlauch**
Safety hose
Tuyau flexible de sécurité

(30) Priorität: 24.07.1993 DE 4324943
(43) Veröffentlichungstag der Anmeldung: 25.01.1995
(73) Patentinhaber: WEIGEL, Bernd, D-97638 Mellrichstadt (DE)
(72) Erfinder: WEIGEL, Bernd, D-97638 Mellrichstadt (DE)
(74) Vertreter: Pöhner, Wilfried Anton, Dr.

(56) Entgegenhaltungen:
- US-A- 2 185 741
- US-A- 3 197 240
- US-A- 3 813 733

## Beschreibung

Die Erfindung bezieht sich auf einen Sicherheitsschlauch, insbesondere Hochdruckschlauch, der von einer flexiblen, hohlzylindrischen Manschette umgeben ist, die vollflächig am Schlauch befestigt und durch ein stirnseitiges Zugmittel an einem Gegenlager fixierbar ist

Mit flüssigen oder gasförmigen Medien druckbeaufschlagte Schlauchleitungen können beispielsweise durch Materialermüdung oder unzulässig hohe, durch Überschreitung der maximalen Grenzwerte der Drücke bedingte Beanspruchungen bersten oder Leckagen bekommen. Dabei treten in erster Linie Brüche der Schlauchleitung an den Verbindungsstellen mit der Armatur, d.h. der eine Befestigung an einem anderen Schlauch, einem Kompressor oder einem druckbeaufschlagten Gerät ermöglichenden Schraubverbindung auf, wobei Defekte vornehmlich am Übergang vom flexiblen Schlauch zur starren, form- oder kraftschlüssig mit dem Schlauch verbundenen Preßhülse der Armatur entstehen. Neben Überlastungen und Alterungserscheinungen des Schlauches oder der Armatur kann auch ein Setzen, also ein Nachlassen der Festigkeit der Verbindung mit der Armatur oder eine durch unsachgemäße Behandlung bedingte Zug- und Knickbeanspruchung der Verbindungsstellen einen Schlauchbruch begünstigen. Aufgrund der hohen Drücke und Volumendurchsätze entstehen durch einen geborstenen Schlauch häufig schwere Verletzungen sich in der Nähe aufhaltenden Personals sowie Beschädigungen benachbarter Gegenstände und Geräte, wobei das Gefährdungspotential nicht nur vom austretenden Medium, sondern auch von den schweren, sich infolge der Reaktionskräfte entgegen der Flußrichtung des Mediums mit hoher kinetischer Energie bewegenden Schlauchenden ausgeht.

Die bisher als Sicherheitsvorkehrung für den Fall eines Schlauchberstens eingesetzten Kabelziehstrümpfe bestehen aus einem flexiblen, netzartigen Metallgeflecht, das über den Schlauch gezogen und stirnseitig durch Zugmittel an einem Gegenlager, gewöhnlich dem benachbarten Gerät oder Schlauch befestigt ist. Zur sicheren Fixierung wird der Kabelziehstrumpf vor der Montage in axialer Rich-tung zusammengepreßt, so daß sich sein Innendurchmesser vergrößert und über den Schlauch geschoben. Mit Beendigung des axialen Druckes dehnt sich der Kabelziehstrumpf in dieser Richtung aus, so daß er sich radial zusammenzieht und in den Schlauch eingreift und verkrallt. Nach einem Schlauchbruch kann zwar das druckbeaufschlagte Medium austreten, jedoch sind aufgrund der Fixierung mittels des Kabelziehstrumpfes die durch die Reaktionskräfte bedingten, als besonders gefährlich einzustufenden Bewegungen des Schlauchs unterbunden.

Bei den bekannten Kabelziehstrümpfen ist neben den hohen Gestehungskosten als nachteilig anzusehen, daß sie bei einer Druckbeaufschlagung des Schlauches über ihre Elastizitätsgrenze hinaus gedehnt werden, so daß nach mehreren Beaufschlagungen Ermüdungsbrüche der einzelnen Fasern auftreten und der Schutz verloren geht. Durch die netzartige Struktur kann sich der Kabelziehstrumpf an Hindernissen wie z.B. Baugerüsten verhaken oder, falls er daran vorbeigezogen wird, aufspleißen, und durch die überstehenden, spitzen Enden entsteht ein weiteres Verletzungsrisiko für das Bedienungspersonal.

Weiterhin ist aus der Druckschrift US 3,197,240 eine Sicherheitsvorrichtung bekannt, die aus einer vollflächig am Schlauch befestigten Manschette besteht und durch ein stirnseitiges Zugmittel, i.a. ein Seil, an einem Gegenlager fixiert ist, so daß bei einem Buch eine unkontrollierte Bewegung des Schlauchendes verhindert wird. Die Verbindung mit dem Zugmittel erfolgt an einer hakenartig die Manschette durchgreifenden Klammer. Auch in diesem Fall besteht die Gefahr eines Verhakens an der Sicherheitsvorrichtung, die die Handhabung erschwert und ein Verletzungsrisiko darstellt.

Ausgehend vom Stande der Technik liegt der Erfindung das Problem zugrunde, einen insbesondere zur Hochdruckbeaufschlagung geeigneten Schlauch so zu gestalten, daß die Arbeitssicherheit vergrößert und ein Verhaken oder Aufspleißen des Berstschutzes an Hindernissen unterbunden ist.

Erfindungsgemäß wird die Aufgabe dadurch gelöst, daß die Manschette aus einem elastischen Material, vorzugsweise Gummi oder Kunststoff, besteht, ein Seil innerhalb der Manschette in axialer Richtung verläuft und das Seil endseitig am Zugmittel befestigbar ist.

Der Kerngedanke der Erfindung besteht darin, den Kabelziehstrumpf durch eine vollflächig mit dem Schlauch verbundene, flexible Manschette aus Gummi oder Kunststoff zu ersetzen, ein Seil innerhalb der Manschette in axialer Richtung einzubringen und über Zugmittel mit einem Gegenlager zu verbinden. Die Montage erfolgt wie bei konventionellen berstgeschützten Schläuchen, d.h. nach dem Anschluß der Armatur an einem Gerät oder an einem Verlängerungsschlauch werden die Stirnseiten der Seile durch Zugmittel am Gegenlager, z.B. dem benachbarten Gerät oder schlauch festgelegt, woraufhin eine Druckbeaufschlagung erfolgen kann. Die Funktionsweise des Berstschutzes ist wie folgt: Falls sich der Schlauch aus seiner Befestigung in der Armatur löst oder nahe der Preßhülse bricht - die Mehrzahl der Schlauchbrüche erfolgt an diesen Stellen - tritt zwar das druckbeaufschlagte Medium aus, jedoch werden die entgegen der Strömungsrichtung laufenden Reaktionskräfte vom Schlauch über die Manschette auf das Seil und über das Zugmittel auf das Gegenlager übertragen, so daß sich der Schlauch um eine kurze Wegstrecke so weit verschiebt, bis die Zugmittel gestrafft sind. Nach einem Bersten des Schlauches in seinem mittleren, von der Manschette umschlossenen Bereich werden die Reaktionskräfte ebenfalls vom Schlauch über die Manschette auf das Seil übertragen, so daß ein vollständiger Bruch, d.h. eine Trennung in zwei Schlauchteile an der Berststelle unterbunden ist. Aufgrund der vollflächigen Befestigung der Manschette am Schlauch und der Montage des Seils zwischen der Manschette und dem Schlauch ist der Kraftschluß und die Festigkeit des Sitzes der Schutzhülle mit der eines neuwertigen Kabelziehstrumpfes zumindest gleichwertig oder ihr sogar überlegen.

Die Vorteile der Erfindung bestehen vornehmlich darin, daß durch die Verwendung einer elastischen Manschette und durch das Vermeiden punktueller Belastungen keine Ermüdungserscheinungen der Schutzhülle mehr auftreten und daß sie sich aufgrund ihrer glatten Oberfläche nicht an Hindernissen verhaken oder aufspleißen kann, so daß die maximal erreichbare Betriebszeit und die Arbeitssicherheit des Bedienungspersonals entscheidend verbessert ist. Weiterhin ist neben den reduzierten Gestehungskosten als vorteilhaft anzusehen, daß eine Nachrüstung bereits vorhandener Schläuche leicht möglich ist und daß die glatte Oberfläche das Verlegen und Ziehen der Schläuche komfortabler gestaltet, so daß Schläuche mit einer Berstschutzeinrichtung häufiger als bisher eingesetzt werden.

Die Aufgabe der Verbindung zwischen dem Schlauch und der Manschette besteht darin, eine dauerhafte, hochbelastbare Fixierung herzustellen. Aufgrund ihrer leichten Anbringbarkeit sind Vulkanisations- oder Klebeverbindungen bevorzugt.

Das Ende des Seils weist vorteilhafterweise die Form einer Schlaufe oder Öse auf, da eine lösbare, jedoch mit hohen Kräften beaufschlagbare Verbindung mit dem Zugmittel möglich ist.

Der Vorteil eines endlosen Seils besteht darin, daß die Stirnseiten in Form einer Schlaufe oder Öse verlegt werden können, wobei keine einen hohen Raumbedarf aufweisende, möglicherweise aufspleißende oder nicht hinreichend stabile Verbindung des Seilendes mit dem übrigen Seil erforderlich ist.

Als Zugmittel sind Stahlseile vorgeschlagen, wobei die Verbindung mit dem Seil und/oder dem Gegenlager vorzugsweise durch Karabinerhaken erfolgt. Derartige Zugmittel werden für die Befestigung der bekannten Kabelziehstrümpfe verwendet und sind daher gewöhnlich bereits vorhanden.

Weiterhin ist empfohlen, ein Seil aus hochfestem, flexiblen Kunststoff-Textilmaterial, vorzugsweise aus kevlar-verstärktem Gewebe zu verwenden, das sich durch hohe Festigkeit bei geringer Masse auszeichnet.

Um die Sicherungseinrichtung auch höchsten Belastungen unterwerfen zu können, ist bevorzugt, mindestens zwei Seile zwischen Manschette und Schlauch anzuordnen, so daß der Schlauch auch fixiert bleibt, falls ein Seil reißen oder brechen sollte. Um die Reaktionskräfte gleichmäßig zu verteilen, sind die Seile vorzugsweise äquidistant über den Umfang des Schlauchs verteilt.

Weitere Einzelheiten, Merkmale und Vorteile der Erfindung lassen sich dem nachfolgenden Beschreibungsteil entnehmen, in dem anhand der Zeichnungen ein Ausführungsbeispiel der Erfindung näher erläutert wird. Sie zeigen in schematischer Darstellung in
- Figur 1: den Aufbau eines Sicherheitsschlauches für Hochdruckbeaufschlagung
- Figur 2: einen an einem Flansch montierten Sicherheitsschlauch
- Figur 3: einen an einem Verlängerungsschlauch montierten Sicherheitsschlauch

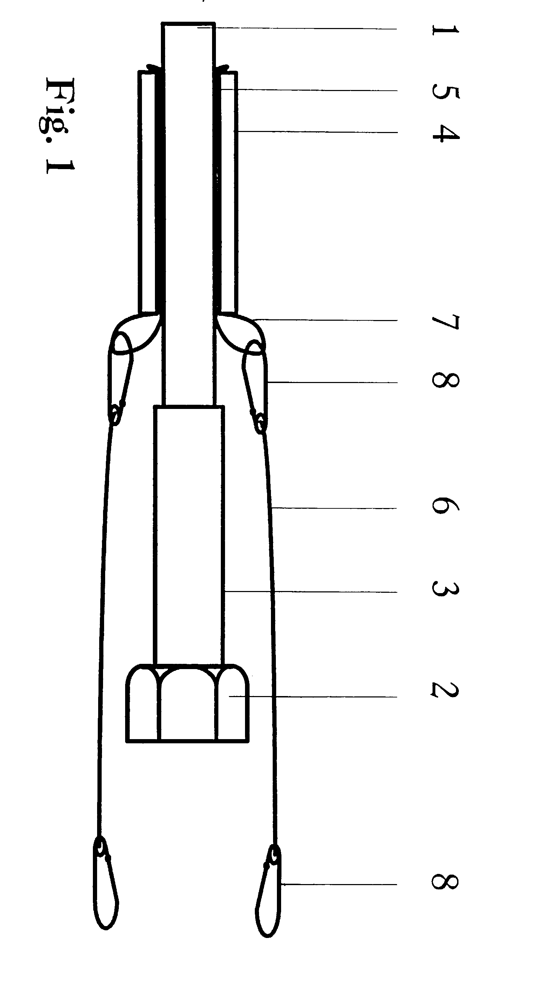

Der in Figur 1 dargestellte Hochdruckschlauch (1) ist an seiner Stirnseite mit einer Armatur (2) kraft- oder formschlüssig über eine Preßhülse (3) verbunden. Durch Materialermüdungen des Schlauches (1), der Armatur (2) oder der Preßhülse (3) kann sich nach einer längeren Betriebszeit der Schlauch (1) aus der Preßhülse (3) lösen oder am Übergang zwischen dem Schlauch (1) und der Preßhülse (3) bersten, mit dem Ergebnis, daß der wegen der hohen Belastungen massiv ausgeführte Schlauch (1) abreißt, sich entgegen der Flußrichtung des druckbeaufschlagten Mediums bewegt und erhebliche Verletzungen des Bedienungspersonals oder Beschädigungen in der Nähe positionierter Gegenstände bedingen kann. Um das Gefährdungspotential zu reduzieren, ist vollflächig um den Schlauch eine hohlzylindrische Manschette (4) vorzugsweise durch eine Vulkanisations- oder Klebeverbindung befestigt und zwischen dem Schlauch (1) und der Manschette (4) sind zwei in axialer Richtung verlaufende, stirnseitig mit Schlaufen (7) versehene Seile (5) montiert. Flexible, stirnseitig mit Karabinerhaken (8) versehene Zugmittel (6) dienen der Befestigung an einem Gegenlager, das ein weiterer Schlauch (1) oder ein Gerät, beispielsweise ein Kompressor sein kann. Falls der Schlauch (1) besten sollte, werden die Reaktionskräfte über die Manschette (4), das Seil (5) und das Zugmittel (6) auf das Gegenlager übertragen, so daß zwar das druckbeaufschlagte Medium austritt, der Schlauch (1) sich jedoch nur soweit bewegt, bis das Zugmittel (6) gestrafft ist. Falls ein Schlauchbruch in dem von der Manschette (4) umschlossenen, mittleren Bereich auftritt, verhindert das Seil (5), daß sich der Schlauch (1) in zwei Teile auftrennt, so daß auch in diesem Fall keine Gefährdung von Personen oder in der Nähe positionierten Gegenständen auftritt.

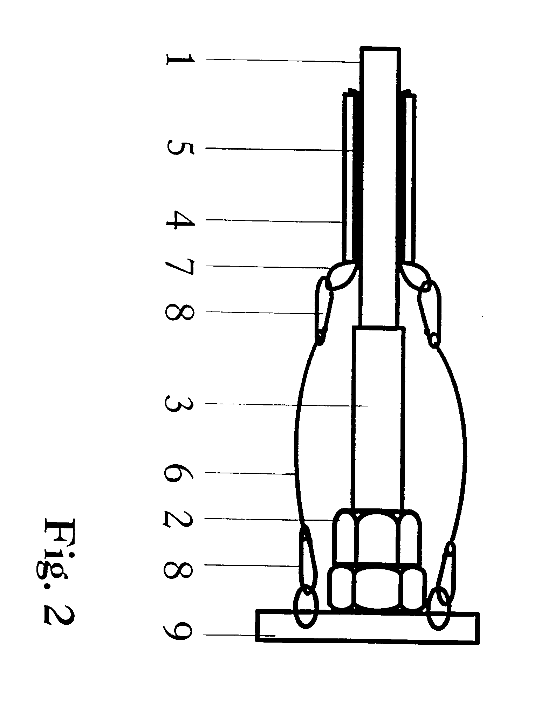

Die Armatur (2) des in Figur 2 dargestellten Hochdruckschlauchs (1) ist an einem Flansch (9) montiert, wobei zwei mit je einem zwischen Schlauch (1) und Manschette (4) verlegten Seil (5) verbundene Zugmittel (6) über Karabinerhaken (8) mit am Flansch (9) montierten Ösen in Verbindung stehen.

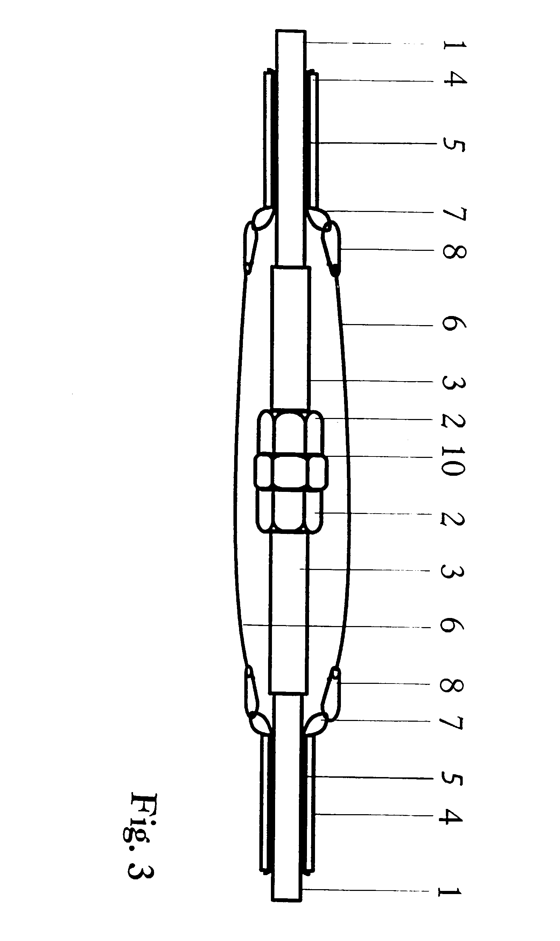

In Figur 3 sind die Seile (5) eines Hochdruckschlauchs (1) über je ein Zugmittel (6) mit den Seilen (5) eines zweiten Schlauches (1') verbunden und die Armaturen (2) der Schläuche (1) mittels einer Gewindemuffe (10) aneinander befestigt.

Im Ergebnis erhält man einen Sicherheitsschlauch, der sich durch reduzierte Gestehungskosten, eine erhöhte Lebensdauer, verbesserte Arbeitssicherheit und durch leichte Verlegbarkeit auszeichnet.

## Patentansprüche

1. Sicherheitsschlauch, insbesondere Hochdruckschlauch, der von einer flexiblen, hohlzylindrischen Manschette umgeben ist, die vollflächig am Schlauch befestigt und durch ein stirnseitiges Zugmittel an einem Gegenlager fixierbar ist, **dadurch gekennzeichnet**, daß
- die Manschette (4) aus einem elastischen Material, vorzugsweise Gummi oder Kunststoff, besteht,
- ein Seil (5) innerhalb der Manschette (4) in axialer Richtung verläuft
- und das Seil (5) endseitig am Zugmittel (6) befestigbar ist.

2. Sicherheitsschlauch nach Anspruch 1, dadurch gekennzeichnet, daß das Seil zwischen der Manschette (4) und dem Schlauch (1) verläuft.

3. Schlauch nach Anspruch 1 oder 2, **dadurch gekennzeichnet**, daß die Manschette (4) durch eine Vulkanisations- oder Klebeverbindung am Schlauch (1) fixiert ist.

4. Schlauch nach einem der Ansprüche 1 bis 3, **dadurch gekennzeichnet**, daß das Ende des Seils (5) die Form einer Schlaufe oder einer Öse aufweist.

5. Schlauch nach einem der Ansprüche 1 bis 4, **dadurch gekennzeichnet**, daß das Seil (5) endlos ist.

6. Schlauch nach einem der Ansprüche 1 bis 5, **dadurch gekennzeichnet**, daß das Zugmittel (6) ein Stahlseil ist.

7. Schlauch nach einem der Ansprüche 1 bis 6, **dadurch gekennzeichnet**, daß das Zugmittel (6) durch Karabinerhaken (8) mit dem Seil (5) und/oder dem Gegenlager verbunden ist.

8. Schlauch nach einem der Ansprüche 1 bis 7, **gekennzeichnet durch** ein Seil (5) aus hochfestem, flexiblen Kunststoff-Textilmaterial, vorzugsweise aus kevlar-verstärktem Gewebe.

9. Schlauch nach einem der Ansprüche 1 bis 8, **gekennzeichnet** durch mindestens zwei vorzugsweise äquidistant über den Umfang des Schlauchs (1) angeordnete Seile (5).

## Claims

1. Safety hose, especially a high pressure hose, which is surrounded by a flexible, hollow cylindrical sleeve, which is affixed to the hose all-over and is fixable to a counter support by means of an endwise tension medium, wherein
- said sleeve (4) consists of an elastic material, preferably rubber or plastic,
- a cable (5) extends within said sleeve (4) in an axial direction,
- and said cable (5) is fixable endwise to tension medium (6).

2. Safety hose according to claim 1, wherein said cable extends between sleeve (4) and hose (1).

3. Hose according claim 1 or 2, wherein said sleeve (4) is affixed to hose (1) by a vulcanisation or glued joint.

4. Hose according to one of claims 1 to 3, wherein the end of cable (5) has the form of a loop or an eye.

5. Hose according to one of claims 1 to 4, wherein said cable (5) is endless.

6. Hose according to one of claims 1 to 5, wherein said tension medium (6) is a steel cable.

7. Hose according to one of claims 1 to 6, wherein said tension medium (6) is connected to said cable (5) and/or the counter support via spring hooks (8).

8. Hose according to one of claims 1 to 7, wherein said cable (5) is made of high strength, flexible plastic-textile material, preferably of kevlar-reinforced fabric.

9. Hose according to one of claims 1 to 8, wherein there are at least two cables (5) disposed preferably equidistantly across the circumference of said hose (1).

## Revendications

1. Tuyau de sécurité, en particulier tuyau haute pression, entouré d'une manchette cylindrique flexible, qui est plaquée de toute sa surface sur le tuyau et peut être fixée à un point d'ancrage par un moyen de tension placé à la partie antérieure, **caractérisé en ce que**
- la manchette (4) est faite en un matériau élastique, de préférence en caoutchouc ou matière plastique,
- un câble (5) s'étend dans la direction axiale à l'intérieur de la manchette (4)
- et le câble (5) peut être fixé à son extrémité au moyen de tension (6).

2. Tuyau de sécurité selon la revendication 1, **caractérisé en ce que** le câble (5) s'étend entre la manchette (4) et le tuyau (1).

3. Tuyau selon la revendication 1 ou 2, **caractérisé en ce que** la manchette (4) est fixée au tuyau (1) par vulcanisation ou collage.

4. Tuyau selon l'une des revendications 1 à 3, **caractérisé en ce que** l'extrémité du câble (5) est en forme de boucle ou d'oeillet.

5. Tuyau selon l'une des revendications 1 à 4, **caractérisé en ce que** le câble (5) est un câble sans fin.

6. Tuyau selon l'une des revendications 1 à 5, **caractérisé en ce que** le moyen de tension (6) est un câble en acier.

7. Tuyau selon l'une des revendications 1 à 6, **caractérisé en ce que** le moyen de tension (6) est relié au câble (5) et/ou au point d'ancrage par un mousqueton (8).

8. Tuyau selon l'une des revendications 1 à 7, **caractérisé en ce que** le câble (5) est fait d'un matériau plastique/textile très résistant et flexible, de préférence en tissu renforcé au kevlar.

9. Tuyau selon l'une des revendications 1 à 8, **caractérisé par** au moins deux câbles (5), disposés de préférence équidistants à la périphérie du tuyau (1).
